# EUROPEAN PATENT APPLICATION

(11) **EP 3 447 447 A1**
(43) Date of publication of application: **27.02.2019**
(21) Application number: 17187758.2
(22) Date of filing: 24.08.2017
(51) Int. Cl.: G01C 21/02

(54) **METHOD, DETECTOR AND DEVICE FOR OFFLINE POSITION DETECTION IN DEPENDENCY OF THE POSITION OF THE SUN**

(71) Applicant: Vestel Elektronik Sanayi ve Ticaret A.S., 45030 Manisa (TR)
(72) Inventor: ISLEK, Caglar, 45030 Manisa (TR)
(74) Representative: Ascherl, Andreas

(57) **Abstract**

The present invention refers according to claim 1 to a method for position detection. The method preferably comprises at least the steps capturing at least one sunlight parameter with a detection means (1) and determining the position of the detection means (1) by matching the sunlight parameter with a sun position table, wherein the sun position table comprises data about the position of the sun in dependency of the date and time.

## Description

The present invention refers according to claim 1 to a method for position detection, according to claim 11 to a computer program product for executing of such a method, according to claim 12 to a detection means and according to claim 15 to a device comprising such a detection means.

### Background of the invention

Prior art document US2017176191A1 discloses a method for enhancing a navigation solution of a portable device and a platform using map information, wherein the mobility of the device is constrained or unconstrained within the platform and wherein the device may be tilted to any orientation, the method comprising: obtaining sensor data for the portable device representing motion of the portable device at a plurality of epochs over a first period of time; deriving navigation solutions for the epochs based at least in part on the sensor data; estimating position information for the portable device based at least in part on the plurality of navigation solutions at a time subsequent to the first period of time; obtaining map information for an area encompassing locations of the portable device during the first period of time; generating multiple hypotheses regarding possible positions of the portable device for at least one epoch during the first period of time based at least in part on the estimated position information and the map information; managing the hypotheses based at least in part on the estimated position information and the map information; processing the managed hypotheses to update the estimated position information for the portable device; and providing an enhanced navigation solution for the at least one epoch using the updated estimated position information.

Further, US4999483A discloses a sun sensor for detecting first and second components of an angle of incidence of sunlight, comprising: transmitting means having an opening with first and second linear portions for transmitting sunlight, a line parallel to the first linear portion crossing a line parallel to the second linear portion at an angle different from 90 degrees; detecting means, having plural detecting elements and disposed along a line, for generating output signals corresponding to sunlight passing through the first and second linear portions; and processing means for determining and producing data signals corresponding to first and second components of the angle of incidence of the sunlight in response to the output signals from the detecting means.

Outdoor sports can be harmful and cause to pay for any mistakes when the person get lost in wild nature and finding direction. Electronic devices especially smartphones have battery problems for long time outdoor activities. GPS and internet services run battery low in very fast manner. In addition, GPS services are not always working in some very wild nature areas.

### Object of the invention

It is an object of the present invention to provide an alternative or better solution, in particularly to wipe out one or multiple of the before mentioned undesirable factors.

### Description of the invention

The before mentioned object is solved by a method for position detection according to claim 1. The method according to the invention preferably comprises at least the steps: capturing at least one sunlight parameter with a detection means, determining the position of the detection means by matching the sunlight parameter with a sun position table, wherein the sun position table comprises data about the position of the sun in dependency of the date and time. Matching can be carried out by processing of an algorithm or by comparing the table values with the actual values.

Thus, the sun position table preferably includes location-time and sun-position matching information. Sun follows a specific path for specific date and location on earth in a year. So, it is the known fact that sun position is fixed for specific time in day and date for the place that coordinates are known.

Sun position is preferably learned respectively determined by an input means, in particularly detection means. For this purpose, a preferably plug-in dome sunlight angle sensor apparatus respectively the detection means is utilized.

In the present invention, the term "smart device" defines a device that has an output means for outputting information, in particularly a display, an internet connectivity, in particularly Wi-Fi and/or GSM, for exchanging data and preferably an interface for inputting data by a user.

This solution is beneficial since it is very reliable and energy efficient.

Further preferred embodiments of the present invention are subject-matter of the following specification parts and/or of the dependent claims.

According to a preferred embodiment of the present invention the step of determining the position is carried out by a processor unit of a device, in particularly a smart device, in particularly a smart phone, smart watch or tablet PC, wherein the device preferably comprises a display means, in particularly a touch screen means, wherein the detection means is part of the device or connected to the device. In case the detection means is connected to the device the connection is a data, signal and/or energy connection and can be set up in contacting or none contacting manner. This embodiment is beneficial since smart devices are very powerful and thus able to process even large sun position tables.

The detection means comprises according to a further preferred embodiment of the present invention multiple light receptor units, wherein each light receptor unit refers to another cardinal direction, wherein a main light barrier unit is arranged between the light receptor units, wherein the main light barrier unit reduces the amount of light reaching a further receptor unit in dependency of an angle of incidence of the sunlight, in particularly an angle between the sunlight and the horizontal.

The sunlight angle detection sensor respectively detection means is preferably composed of at least two or more than two, in particularly up to four preferably equivalent lamination sensor parts respectively light receptor units. These four pieces, which corresponds to four different directions, are preferably separated with primary opaque plate respectively with a light tight barrier. The incident sunlight beam arrives to this sensor structure and illuminates more relevant directed optic sensor at most level. Primary opaque plates preferably fully avoid light pass through other light receptors.

Each light receptor unit comprises according to another embodiment of the present invention a first light receptor means and a second light receptor means, wherein the height of the first light receptor means is higher than the height of the second light receptor means, wherein a sub barrier means is provided between the first light receptor means and the second light receptor means, wherein the sub barrier means reduces the amount of light reaching the first light receptor means in dependency of an angle of incidence of the sunlight, in particularly an angle between the sunlight and the horizontal. Moreover, sensors respectively first and second receptor means of each light receptor unit are capable to detect the angle of the light beam with respect to the ground. For close to right angle sunbeams secondary opaque plates allow to pass both two receptors in the one of four sections are illuminated. But for small angles, secondary opaque plate avoids most of the light pass through from second one to first receptor. The illumination difference between these receptor gives angle difference by taking right angle light beam as a reference. As a conclusion, we can make a deduction about sun-position on the person's location by the help of optical sensor structure.

The main light barrier unit has according to a further preferred embodiment of the present invention a maximum height that is higher compart to the maximum height of the sub barrier means and/or the main light barrier unit has an average height that is higher compart to the average height of the sub barrier means and/or the main light barrier unit and/or the sub barrier means are formed by opaque plates, in particularly plates that are light-tight and/or the first light receptor means is arranged closer to the main light barrier unit compared to the second light receptor means. This embodiment is beneficial since the overall structure of the detection means is

At least two light receptor units, in particularly four light receptor units or up to four light receptor units, emit data or signals representing the amount of light captured by the respective light receptor means of the individual light receptor unit. An angle of incidence of the sunlight is preferably determined by evaluating the captured amounts of light. This embodiment is beneficial since due to the determined angle of incidence the relative position between the sun and the detection means can be calculated.

The at least one sunlight parameter, in particularly angle of incidence, is captured respectively determined at different times, wherein preferably at least 30 sec. or at least or up to 1 min or at least or up to 10 min or at least or up to 15 min or at least or up to 20 min or at least or up to 30min or at least or up to 45min or at least or up to 1h or at least or up to 3h pass by until the sunlight parameter is captured respectively determined again, wherein the detection preferably is in the same position during each capturing of the sunlight parameter. This embodiment is beneficial since due to different capturing events different relative positions between the detection means and the sun can be processed. Since the path of the sun is known the position of the detection means can be calculated very precisely.

The signals or data outputted by the light receptor units at different times are processed according to a further preferred embodiment to determine the orientation of the detection means, wherein the position of the detection means is determined in dependency of the orientation of the detection means and the position of the sun at multiple times during the same day, in particularly in dependency of a relative movement between the position of the detection means and the sun. This embodiment is beneficial since an offline map can be orientated and displayed correctly.

Thus, determined position is displayed according to a further preferred embodiment of the present invention on an offline map stored in a data storage means of the device. Thus, an offline map, a stored location-time-sun position table to calculate close to exact location finding, a sunlight angle sensor to obtain sun-position information are serving the related solution in the invention. Person's smart device, in particular smartphone, smart watch or tablet PC, is capable of keeping offline maps and information tables in the memory. Offline maps can be obtained by downloading from related sites or via an app store link related with this invention's application respectively computer program product. Additionally, or alternatively offline maps can be preinstalled on the device.

A destination is registered according to a further preferred embodiment of the present invention via input means, in particularly the display means, and a route is calculated by the processor unit, wherein the distance between the determined position of the detection means and the destination is calculated and outputted. This embodiment is beneficial since the user receives feedback about how much time would be necessary to reach the destination.

The present invention further refers according to claim 11 to a computer program product for executing of a method according to at least one of the preceding claims.

The before mentioned object is also solved by a detection means for position detection according to claim 12. The detection means preferably comprises at least multiple light receptor units, wherein each light receptor unit refers to another cardinal direction, a main light barrier unit is arranged between the light receptor units, wherein the main light barrier unit reduces the amount of light reaching a further receptor unit in dependency of an angle of incidence of the sunlight, in particularly an angle between the sunlight and the horizontal, a signal or data connection means for outputting signals or data generated in dependency of the captured light.

Each light receptor unit comprises according to a further embodiment a first light receptor means and a second light receptor means, wherein the height of the first light receptor means is higher than the height of the second light receptor means. A sub barrier means is preferably provided between the first light receptor means and the second light receptor means. The sub barrier means preferably reduces the amount of light reaching the second light receptor means in dependency of an angle of incidence of the sunlight, in particularly an angle between the sunlight and the horizontal.

The main light barrier unit has according to a further preferred embodiment of the present invention a maximum height that is higher compart to the maximum height of the sub barrier means and/or the main light barrier unit has an average height that is higher compart to the average height of the sub barrier means. Additionally, or alternatively the main light barrier unit and/or the sub barrier means are formed by opaque plates, in particularly plates that are light-tight. It is also possible that the plates comprise light filters, in particularly one filter that filters all blue light waves and/or one filter that filters all red light waves and/or one filter that filters all green light waves or one filter that enables just green light waves to pass and/or one filter that enables just red light waves to pass and/or one filter that enables just blue light waves to pass. Thus, one light receptor unit receives white light and the other receptor units receive a fraction of the white light. Due to variations of the angle of incidence the amount of light reaching the individual light receptor units varies. This can be used to determine the relative position between the detection means and the sun in a beneficial manner. Additionally, or alternatively the first light receptor means is arranged closer to the main light barrier unit compared to the second light receptor means. Additionally, or alternatively the light receptor units form a common base plate respectively are arranged on a common base plate. The common base plate preferably has a disc like shape.

The before mentioned object is also solved by a device for position detection according to claim 15. The device according to the present invention preferably comprises at least a detection means according to claims 12 to 14, a storage means for storing offline maps and a sun position table, wherein the sun position table comprises data about the position of the sun in dependency of the date and time, a display means for displaying offline maps, a processor unit for determining a position on an offline map in dependency of signals and/or data provided by the detection means and the sun position table.

Further benefits, goals and features of the present invention will be described by the following specification of the attached figures, in which exemplarily components of the invention are illustrated. Components of the devices, units and methods according to the invention, which match at least essentially with respect to their function can be marked with the same reference sign, wherein such components do not have to be marked or described multiple times with respect to said figure. In the following the invention is just exemplarily described with respect to the attached figure.

### Brief Description of the Drawings

- Fig. 1: shows a first schematic illustration (side view) of the detection means of the present invention;
- Fig.: 2a shows a second schematic illustration (top view) of the detection means of the present invention; and
- Fig. 2b: shows a device, in particularly smart device, with an integrated detection means.

### Detailed Description of the Drawings

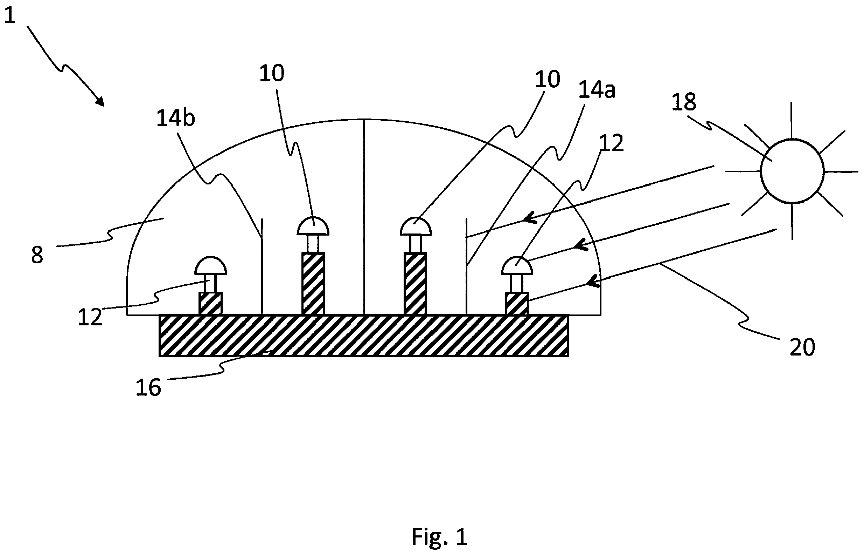

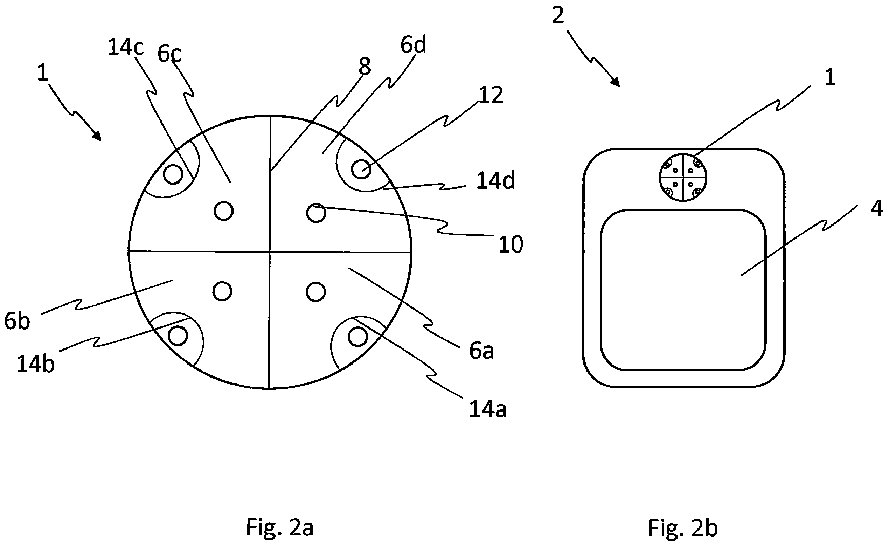

Fig. 1 shows a detection means 1 for position detection. Said detection means 1 comprises multiple light receptor units 6a-6d (cf. fig. 2a). Each light receptor unit 6a-6d preferably refers to another cardinal direction. A main light barrier unit 8 is arranged between the light receptor units 6a-6d, wherein the main light barrier unit 8 reduces the amount of light reaching a further receptor unit in dependency of an angle of incidence of the sunlight, in particularly an angle between the sunlight and the horizontal. The detection means 1 further preferably comprises a signal or data connection means (not shown) for outputting signals or data generated in dependency of the captured light. Such signals or data can be preferably processed by a processor unit of a device 2 (cf. fig. 2b) in particularly a smart device.

The detection means 1 preferably comprises a base plate 16, wherein said light receptor units 6a-6d are preferably arranged on top of said base plate 16. The base plate 16 can be a printed circuit board or a substrate. Each light receptor unit 6a-6d preferably comprises at least one or multiple first light receptor means 10 and one or multiple second receptor means 12. Second receptor means 12 is preferably arranged in a larger distance to the center of base plate 16 compared to first receptor means 10. Second receptor means 12 is preferably arranged on a height which is smaller than the height of first receptor means 10. A sub barrier means 14a-14d is preferably arranged between the first receptor means 10 and the second receptor means 12.

The amount of sunlight 20 captured by the first light receptor means 10 and/or second receptor means 12 of a specific light receptor unit 6a-6d varies in dependency of the angle of incidence of the light waves 20. Reference number 18 identifies the sun.

Fig. 2a shows a top view of the detection means of fig. 1. It is possible that each or individual light receptor units 6a-6d have multiple first receptor means 10 and/or multiple second receptor means 12, wherein the number of first receptor means 10 and second receptor means 12 can differ. Each light receptor unit 6a-6d preferably provides signals and/or data, wherein said signals and/or data is preferably evaluated by means of algorithms.

Fig. 2b shows an example of a smart device 2. According to this example the device comprises a screen 4 and a detection means 1. It is further possible that the detection means 1 is connected by wire or wireless with a device 2, in particularly a smart device.

Due to the present invention, the below mentioned steps can be carried out:
An application respectively computer program product which includes sun-position, date and location table calculation algorithms can be pre-installed on a device or downloaded to a device. The application can provide offline maps or a download link for downloading offline navigation maps. When a user got lost, the date and time and preferably an approximately location (it can work for approximately 100 km range input because the sun position don't change significantly for this range) can be entered by a user or estimated by the device, in particularly in dependency of the last known position. The detection means, in particularly optical sensor structure, can be preferably plug in the smartphone's connection part, like a USB port. The detection means and/or device is preferably placed on a flat surface having the detection means facing upwards. The detection means respectively optical sensor detects the sun-position and calculation occurs by help of look-up table. Compass directions are found by the calculations and displayed from the smartphone screen. Thus, by the help of offline map, predicted closest settlements with direction arrows and distances can be displayed with the help of calculated compass and predicted input location.

Thus, the present invention refers to a method for position detection. The method preferably comprises at least the steps capturing at least one sunlight parameter with a detection means 1 and determining the position of the detection means 1 by matching the sunlight parameter with a sun position table, wherein the sun position table comprises data about the position of the sun in dependency of the date and time.

### List of reference numbers

- 1: detection means
- 2: device
- 4: display means
- 6a-6d: light receptor units
- 8: main light barrier unit
- 10: first light receptor means
- 12: second light receptor means
- 14a-14d: sub barrier means
- 16: base plate
- 18: sun
- 20: light waves

## Claims

1. Method for position detection,
at least comprising the steps:
capturing at least one sunlight parameter with a detection means (1),
determining the position of the detection means (1) by matching the sunlight parameter with a sun position table,
wherein the sun position table comprises data about the position of the sun in dependency of the date and time.

2. Method according to claim 1,
**characterized in that**
the step of determining the position is carried out by a processor unit of a device (2), in particularly a smart device,
wherein the device (2) comprises a display means (4),
wherein the detection means (1) is part of the device (2) or connected to the device (2).

3. Method according to claim 2,
**characterized in that**
the detection means (1) comprises multiple light receptor units (6a-6d),
wherein each light receptor unit (6a-6d) refers to another cardinal direction,
wherein a main light barrier unit (8) is arranged between the light receptor units (6a-6d)
wherein the main light barrier unit (8) reduces the amount of light reaching a further receptor unit in dependency of an angle of incidence of the sunlight, in particularly an angle between the sunlight and the horizontal.

4. Method according to claim 3,
**characterized in that**
each light receptor unit (6a-6d) comprises a first light receptor means (10) and a second light receptor means (12), wherein the height of the first light receptor means (10) is higher than the height of the second light receptor means (12),
wherein a sub barrier means (14a-14d) is provided between the first light receptor means (10) and the second light receptor means (12),
wherein the sub barrier means (14a-14d) reduces the amount of light reaching the first light receptor means (10) in dependency of an angle of incidence of the sunlight, in particularly an angle between the sunlight and the horizontal.

5. Method according to claim 4,
**characterized in that**
the main light barrier unit (8) has a maximum height that is higher compart to the maximum height of the sub barrier means (14a-14d) and/or the main light barrier unit (8) has an average height that is higher compart to the average height of the sub barrier means (14a-14d)
and/or
the main light barrier unit 88) and/or the sub barrier means (14a-14d) are formed by opaque plates, in particularly plates that are light-tight
and/or
the first light receptor means (10) is arranged closer to the main light barrier unit (8) compared to the second light receptor means (12).

6. Method according to claims 4 or 5,
**characterized in that**
at least two light receptor units (6a-6d) emit data or signals representing the amount of light captured by the light receptor means (10, 12),
wherein an angle of incidence of the sunlight is determined by evaluating the captured amounts of light.

7. Method according to claim 6,
**characterized in that**
the at least one sunlight parameter is captured at different times, wherein preferably at least 30 sec. or at least or up to 1 min or at least or up to 10 min or at least or up to 15 min or at least or up to 20 min or at least or up to 30min or at least or up to 45min or at least or up to 1h or at least or up to 3h pass by until the sunlight parameter is captured again, wherein the detection preferably is in the same position during each capturing of the sunlight parameter.

8. Method according to claim 7,
**characterized in that**
the signals or data outputted by the light receptor units (6a-6d) at different times are processed to determine the orientation of the detection means (1),
wherein the position of the detection means (1) is determined in dependency of the orientation of the detection means (1) and the position of the sun at multiple times during the same day, in particularly in dependency of a relative movement between the position of the detection means (1) and the sun.

9. Method according to claim 8,
**characterized in that**
the determined position is displayed on an offline map stored in a data storage means of the device (1).

10. Method according to claim 9,
**characterized in that**
a destination is registered via input means, in particularly the display means, and a route is calculated by the processor unit, wherein the distance between the determined position of the detection means (1) and the destination is calculated and outputted.

11. Computer program product for executing of a method according to at least one of the preceding claims.

12. Detection means (1) for position detection,
at least comprising
multiple light receptor units (6a-6d),
wherein each light receptor unit (6a-6d) refers to another cardinal direction,
a main light barrier unit (8) is arranged between the light receptor units (6a-6d),
wherein the main light barrier unit (8) reduces the amount of light reaching a further receptor unit in dependency of an angle of incidence of the sunlight, in particularly an angle between the sunlight and the horizontal,
a signal or data connection means for outputting signals or data generated in dependency of the captured light.

13. Detection means according to claim 12,
**characterized in that**
each light receptor unit (6a-6d) comprises a first light receptor means (10) and a second light receptor means (12), wherein the height of the first light receptor means (10) is higher than the height of the second light receptor means (12),
wherein a sub barrier means (14a-14d) is provided between the first light receptor means (10) and the second light receptor means (12),
wherein the sub barrier means (14a-14d) reduces the amount of light reaching the second light receptor means (12) in dependency of an angle of incidence of the sunlight, in particularly an angle between the sunlight and the horizontal.

14. Detection means according to claim 13,
**characterized in that**
the main light barrier unit (8) has a maximum height that is higher compart to the maximum height of the sub barrier means (14a-14d) and/or the main light barrier unit (8) has an average height that is higher compart to the average height of the sub barrier means (14a-14d)
and/or
the main light barrier unit (8) and/or the sub barrier means (14a-14d) are formed by opaque plates, in particularly plates that are light-tight,
and/or
the first light receptor means (10) is arranged closer to the main light barrier unit (8) compared to the second light receptor means (12).

15. Device (2) for position detection,
at least comprising:
a detection means (1) according to claims 12 to 14,
a storage means for storing offline maps and a sun position table,
wherein the sun position table comprises data about the position of the sun in dependency of the date and time.,
a display means (4) for displaying offline maps,
a processor unit for determining a position on an offline map in dependency of signals and/or data provided by the detection means (1) and the sun position table.

## Amended claims

### Amended claims in accordance with Rule 137(2) EPC.

1. Method for position detection,
at least comprising the steps:
capturing at least one sunlight parameter with a detection means (1),
determining the position of the detection means (1) by matching the sunlight parameter with a sun position table,
wherein the sun position table comprises data about the position of the sun in dependency of the date and time,
wherein the step of determining the position is carried out by a processor unit of a device (2),
wherein the device (2) comprises a display means (4),
wherein the detection means (1) is part of the device (2) or connected to the device (2),
wherein the detection means (1) comprises multiple light receptor units (6a-6d),
wherein a main light barrier unit (8) is arranged between the light receptor units (6a-6d)
wherein the main light barrier unit (8) reduces the amount of light reaching a further receptor unit in dependency of an angle of incidence of the sunlight, in particularly an angle between the sunlight and the horizontal,
**characterized in that**
each light receptor unit (6a-6d) comprises a first light receptor means (10) and a second light receptor means (12), wherein the height of the first light receptor means (10) is higher than the height of the second light receptor means (12),
wherein a sub barrier means (14a-14d) is provided between the first light receptor means (10) and the second light receptor means (12),
wherein the sub barrier means (14a-14d) reduces the amount of light reaching the first light receptor means (10) in dependency of an angle of incidence of the sunlight wherein the signals or data outputted by the light receptor units (6a-6d) at different times are processed to determine the orientation of the detection means (1),
wherein the position of the detection means (1) is determined in dependency of the orientation of the detection means (1) and the position of the sun at multiple times during the same day.

2. Method according to claim 1,
**characterized in that**
the main light barrier unit (8) has a maximum height that Is higher compared to the maximum height of the sub barrier means (14a-14d) and/or the main light barrier unit (8) has an average height that is higher compared to the average height of the sub barrier means (14a-14d) and/or
the main light barrier unit 88) and/or the sub barrier means (14a-14d) are formed by opaque plates
and/or
the first light receptor means (10) is arranged closer to the main light barrier unit (8) compared to the second light receptor means (12).

3. Method according to claims 1 or 2
**characterized in that**
at least two light receptor units (6a-6d) emit data or signals representing the amount of light captured by the light receptor means (10, 12),
wherein an angle of Incidence of the sunlight is determined by evaluating the captured amounts of light.

4. Method according to claim 3,
**characterized in that**
the at least one sunlight parameter is captured at different timesuntil the sunlight parameter is captured again.

5. Method according to claim 4,
**characterized in that**
the determined position is displayed on an offline map stored in a data storage means of the device (1).

6. Method according to claim 5,
**characterized in that**
a destination is registered via Input means, wherein the distance between the determined position of the detection means (1) and the destination is calculated and outputted.

7. Computer program product for executing of a method according to at least one of the preceding claims.

8. Detection means (1) for usage In a method according to claims 1 to 6,
at least comprising
multiple light receptor units (6a-6d),
wherein each light receptor unit (6a-6d) refers to another cardinal direction,
a main light barrier unit (8) is arranged between the light receptor units (6a-6d),
wherein the main light barrier unit (8) reduces the amount of light reaching a further receptor unit in dependency of an angle of incidence of the sunlight,
a signal or data connection means for outputting signals or data generated in dependency of the captured light,
**characterized in that**
each light receptor unit (6a-6d) comprises a first light receptor means (10) and a second light receptor means (12), wherein the height of the first light receptor means (10) is higher than the height of the second light receptor means (12),
wherein a sub barrier means (14a-14d) is provided between the first light receptor means (10) and the second light receptor means (12),
wherein the sub barrier means (14a-14d) reduces the amount of light reaching the second light receptor means (12) in dependency of an angle of incidence of the sunlight further comprising
a storage means for storing offline maps and a sun position table,
wherein the sun position table comprises data about the position of the sun in dependency of the date and time,
a display means (4) for displaying offline maps,
a processor unit for determining a position on an offline map in dependency of signals and/or data provided by the detection means (1) and the sun position table.

9. Detection means according to claim 8,
**characterized in that**
the main light barrier unit (8) has a maximum height that is higher compared to the maximum height of the sub barrier means (14a-14d) and/or the main light barrier unit (8) has an average height that is higher compared to the average height of the sub barrier means (14a-14d) and/or
the main light barrier unit (8) and/or the sub barrier means (14a-14d) are formed by opaque platesand/or
the first light receptor means (10) is arranged closer to the main light barrier unit (8) compared to the second light receptor means (12).
